# FASCICULE DE BREVET EUROPEEN

(11) **EP 0 330 562 B1**
(45) Date de publication et mention de la délivrance du brevet: **09.06.1993**
(21) Numéro de dépôt: 89400482.9
(22) Date de dépôt: 21.02.1989
(51) Int. Cl.: H02K 49/04, F16D 65/847, F16D 65/12

(54) **Perfectionnements aux rotors induits des ralentisseurs électromagnétiques**
Drehende Ankern der elektromagnetischen Verzögerer
Rotating armatures of electromagnetic retarders

(30) Priorité: 23.02.1988 FR 8802125
(43) Date de publication de la demande: 30.08.1989
(73) Titulaire: LABAVIA S.G.E., F-78180 Montigny le Bretonneux (FR)
(72) Inventeur: Estaque, Michel, F-95150 Taverny (FR)
(74) Mandataire: Behaghel, Pierre

(56) Documents cités:
- FR-A- 2 167 660
- FR-A- 2 341 071
- FR-A- 2 485 667
- GB-A- 2 171 159

## Description

L'invention est relative aux rotors induits des ralentisseurs électromagnétiques, notamment pour véhicules, rotors comprenant au moins un disque en acier propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux pour lesquels la face du disque opposée à l'entrefer est raccordée à une pluralité d'ailettes, chaque ailette s'étendant axialement à partir de ladite face et étant délimitée par deux faces parallèles ou sensiblement telles inclinées en chacun de leurs points vers l'arrière sur les rayons correspondants d'angles supérieurs à 45 degrés et incurvées de façon à présenter leurs concavités vers l'arrière, les crêtes des ailettes étant raccordées entre elles par une joue annulaire et l'ensemble du disque, des ailettes et de la joue étant constitué en un seul bloc moulé (voir FR-A-2 167 660).

Elle vise plus particulièrement encore, mais non exclusivement, parmi les rotors considérés, ceux pour lesquels le disque est racccordé à une bague de fixation interne par des bras prolongeant certaines des ailettes, cette bague et ces bras étant, eux aussi, venus de moulage avec le disque.

L'évacuation des calories engendrées dans le disque d'un tel rotor par les courants de Foucault, lors de la mise en service du ralentisseur équipé de ce rotor, se fait essentiellement par conduction, rayonnement et convection à partir du disque, des ailettes et de la joue ainsi que des bras si ceux-ci sont prévus, la convection étant fortement renforcée par ventilation : en effet la présence des ailettes fait jouer au rotor un rôle de ventilateur en balayant par un courant d'air de refroidissement les surfaces chaudes à refroidir.

Dans les modes de réalisation connus, les ailettes sont relativement épaisses et peu nombreuses.

En effet les rotors considérés sont généralement fabriqués par un procédé de coulée dans des moules en sable, lequel procédé ne permet pas de réaliser des ailettes d'épaisseur inférieure à 7 mm : en pratique, dans les réalisations connues, les rotors présentant un diamètre extérieur de l'ordre de 500 mm comportent un nombre d'ailettes au maximum égal à 24.

On ne pensait pas d'ailleurs qu'il soit opportun de réduire l'épaisseur de ces ailettes et d'augmenter leur nombre pour améliorer le refroidissement du disque.

Or un tel refroidissement est vivement recherché.

On rappelle en effet :
- qu'en cours de fonctionnement, le disque peut être porté au rouge, sa température atteignant ou même dépassant une valeur de l'ordre de 700° C,
- et que le couple de ralentissement susceptible d'être engendré par le ralentisseur équipé de ce disque est réduit dans une proportion considérable lorsque ce disque s'échauffe.

C'est ainsi que ce couple peut décroître d'une valeur C à une valeur C/3, pour des valeurs données de la vitesse de rotation et de la puissance électrique consommée, lorsque le disque s'échauffe de la température ambiante à une température de l'ordre de 700° C.

L'invention a pour but, surtout, d'améliorer le refroidissement du disque au cours du fonctionnement du ralentisseur et donc d'augmenter la valeur du couple à chaud engendré par cet appareil sans pour autant accroître de façon sensible le couple nécessaire à l'entraînement du ralentisseur.

A cet effet, les rotors du genre en question selon l'invention sont essentiellement caractérisés en ce que leurs ailettes sont au nombre de 64 au moins et sont particulièrement minces et rapprochées, l'épaisseur de chaque ailette étant inférieure à 5 mm et la largeur de l'intervalle compris entre deux ailettes consécutives, en sa zone la plus étroite, comptée perpendiculairement aux faces en regard des ailettes, étant inférieure à 10 mm.

La demanderesse a constaté que, d'une façon surprenante, le refroidissement des rotors ainsi définis au cours de leur fonctionnement était fortement amélioré, et que leur couple de ralentissement à chaud était accru dans une proportion considérable, par rapport aux ralentisseurs antérieurement connus : pour un rotor à 64 ailettes conforme à l'invention, ladite augmentation de couple est de l'ordre de 50 % par rapport à un rotor du genre connu à 16 ailettes.

Parallèlement la demanderesse a observé qu'il existe depuis peu sur le marché des procédés de coulée de l'acier permettant de réaliser des pièces de géométrie complexe et de relativement grandes dimensions comportant des portions de petite épaisseur, savoir inférieure à 7 mm.

Ces procédés rendent possible la fabrication industrielle des rotors améliorés du genre défini ci-dessus.

Dans des modes de réalisation préférés, on a recours en outre à l'une et/ou à l'autre des dispositions suivantes :
- l'épaisseur de chaque ailette est de l'ordre de 3 à 4 mm,
- les ailettes sont réunies entre elles à un niveau intermédiaire entre leur base et leur crête par un anneau mince venu de moulage avec elles,
- l'anneau ci-dessus est plan,
- l'épaisseur de l'anneau ci-dessus est de l'ordre de 3 mm,
- dans un rotor du genre ci-dessus comportant des bras de raccordement à une bague de fixation, chaque bras prolonge deux ailettes contiguës qui se fondent en lui,
- chacune des ailettes est décomposée en plusieurs tronçons décalés les uns par rapport aux autres et formant une pluralité de couronnes concentriques qui sont toutes composées par des nombres identiques de tronçons.

L'invention comprend, mises à part ces dispositions principales, certaines autres dispositions qui s'utilisent de préférence en même temps et dont il sera plus explicitement question ci-après.

Dans ce qui suit, l'on va décrire plusieurs modes de réalisation préférés de l'invention en se référant aux dessins ci-annexés d'une manière bien entendu non limitative.

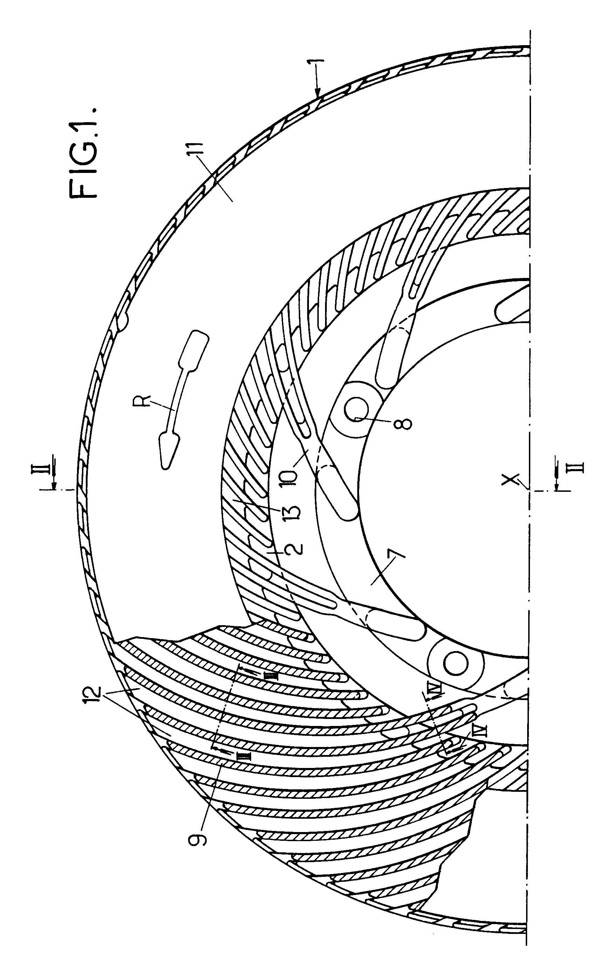

Les figures 1 et 2, de ces dessins, montrent un rotor de ralentisseur électromagnétique établi conformément à l'invention respectivement en demi-vue en bout selon la flèche I de la figure 2 et en demi-coupe axiale selon II-II, figure 1, le stator correspondant étant en outre représenté partiellement en spectre sur la figure 2.

Les figures 3 et 4 sont des coupes de la figure 1 respectivement selon III-III et selon IV-IV.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucault" et qui comportent un disque induit 2 en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur, ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor 1 comprend, en plus du disque 2, et venues de moulage avec ce disque :
- une bague de fixation 7 de diamètre moyen inférieur au diamètre intérieur du disque 2, percée d'alésages axiaux 8, filetés ou non, destinés à recevoir des boulons de fixation de cette bague sur la pièce intermédiaire 6,
- une couronne d'ailettes de ventilation 9 faisant saillie sur la face, du disque 2, opposée à sa face destinée à délimiter l'entrefer E,
- une couronne de bras 10 prolongeant vers l'axe X certaines des ailettes 9 et raccordés eux-mêmes à la bague 7,
- et une jante ou joue annulaire 11 s'étendant en général parallèlement au disque et reliant les crêtes des ailettes 9 de façon à former entre ces ailettes, le disque et la joue des canaux de guidage 12 pour l'air de ventilation.

Chaque ailette 9 est délimitée par deux faces parallèles ou sensiblement telles inclinées sur les rayons correspondants vers l'arrière par rapport au sens de rotation R du rotor, si l'on considère les rayons croissants, et incurvées de façon à présenter leurs concavités vers l'arrière, l'angle d'inclinaison formé par chaque face d'ailette en chacun de ses points sur le rayon correspondant étant supérieur à 45 degrés et notamment de l'ordre de 50 à 60 degrés.

Les bras 10 sont de préférence axialement coudés, comme dans le mode de réalisation illustré sur la figure 2, de façon à "rentrer" axialement la bague 7 vers l'intérieur du stator et à réduire ainsi l'encombrement axial de la portion centrale du rotor.

Mais lesdits bras 10 pourraient également être "droits", leurs lignes moyennes demeurant alors sensiblement contenues dans un même plan transversal.

Le nombre des bras 10 de chaque rotor est avantageusement égal à huit.

C'est l'évacuation des calories engendrées dans le disque 2 par la création des courants de Foucault lors des mises en service du ralentisseur que la présente invention se propose d'améliorer.

A cet effet l'on donne à l'épaisseur des ailettes 9 et à leurs écartements mutuels des valeurs beaucoup plus faibles que dans les réalisations connues, ces ailettes étant donc beaucoup plus nombreuses et plus serrées.

L'épaisseur en question, qui était de l'ordre de 8 mm dans les réalisations antérieures, est ici inférieure à 5 mm et de préférence de l'ordre de 3 à 4 mm alors que l'écartement mutuel de deux ailettes consécutives, considéré selon la direction perpendiculaire à ces ailettes, à l'endroit le plus étroit de l'intervalle compris entre lesdites ailettes, écartement qui était supérieur à 15 mm dans les réalisations antérieures, est ici inférieur à 10 mm et de préférence de l'ordre de 5 mm.

Le nombre qui en résulte pour les ailettes est beaucoup plus élevé que précédemment ; c'est ainsi que, pour un rotor dont le diamètre extérieur est de l'ordre de 50 cm, ledit nombre est par exemple égal à 64, comme dans la réalisation illustrée, alors qu'il était antérieurement au plus égal à 24.

Les bras 10 qui relient le disque aileté à la bague de fixation 7 sont plus épais que les ailettes 9.

Dans le mode de réalisation illustré sur les figures, chaque bras 10 prolonge deux ailettes consécutives 9 qui se fondent en ces bras : l'épaisseur desdits bras est un peu inférieure au total des épaisseurs de deux ailettes et de l'intervalle qui sépare ces dernières, étant notamment de l'ordre de 12 mm.

Dans ledit mode de réalisation illustré, on trouve en outre au milieu de la hauteur axiale des ailettes, c'est-à-dire à mi-chemin entre le disque 2 et la joue 11, un anneau plan 13 qui entretoise lesdites ailettes et est venu de moulage avec elles.

Cet anneau 13 est de préférence délimité par deux plans transversaux très rapprochés, leur écartement --qui définit l'épaisseur axiale de l'anneau-- étant de préférence de l'ordre de 3 mm.

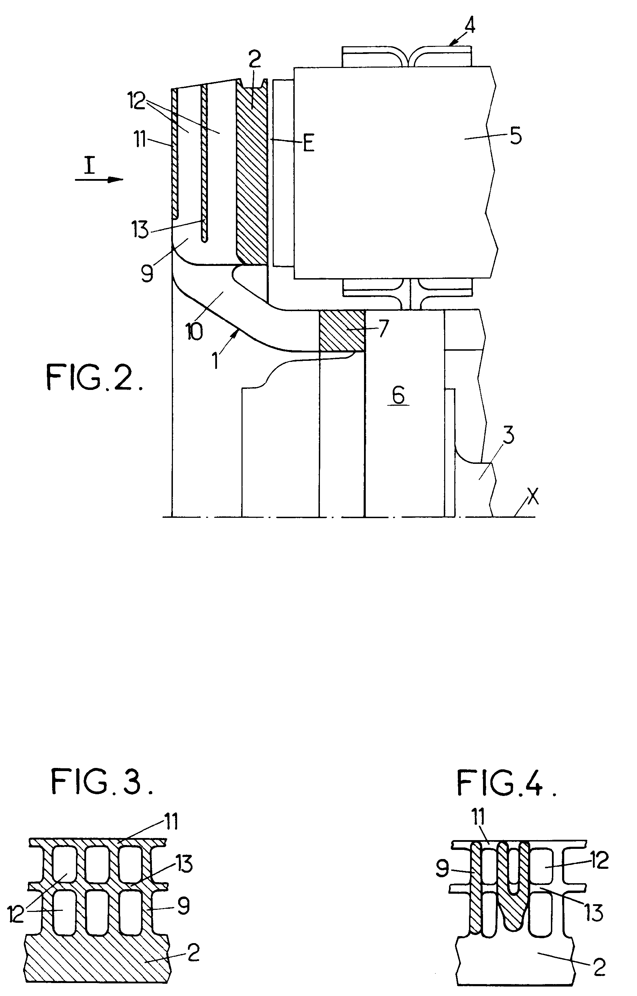

Comme on le voit sur les figures 2 et 3, les différents canaux 12 délimités pour l'air de ventilation par le disque 2, la joue 11, l'anneau 13 et les ailettes 9 sont étroits et rapprochés et se succèdent en étant juxtaposés non seulement selon une direction circonférentielle, mais aussi selon la direction axiale, à la façon d'un faisceau de canaux à section quadrillée ou de nids d'abeilles.

Comme visible sur la figure 3, la joue 11 est aussi mince que l'anneau 13, son épaisseur axiale étant avantageusement de l'ordre de 3 mm.

Avec un rotor agencé de la manière décrite ci-dessus et illustrée sur les dessins, le refroidissement du disque est fortement amélioré et l'accroissement du couple de ralentissement résultant de cette amélioration, lorsque le ralentisseur est chaud et fonctionne à un régime de croisière, est considérable, cet accroissement pouvant atteindre et dépasser 50 % dudit couple pour les valeurs numériques explicitées ci-dessus.

Pour ce qui est du procédé de fabrication des rotors ci-dessus décrits, on a avantageusement recours à un procédé de moulage de précision mettant en oeuvre un modèle perdu tel que celui diffusé sous l'appellation POLYCERAM par la Société "Fonderies et Aciers de Bourges .

Selon ce procédé, le modèle perdu est formé en comprimant dans une boîte à modèle, représentant en négatif la pièce à produire, des billes de polystyrène expansé, puis en y injectant de la cire, puis en revêtant le modèle ainsi formé d'une mince carapace céramique par trempage dans une barbotine appropriée et en durcissant ladite carapace par une cuisson au four, laquelle élimine ledit modèle lui-même par combustion. La carapace ainsi durcie est ensuite placée dans un châssis rempli de sable sec avant de recevoir l'acier liquide.

En suite de quoi et quel que soit le mode de réalisation adopté, on dispose finalement d'un rotor dont la constitution et les avantages (notamment la nette amélioration du refroidissement et, par suite, l'accroissement considérable du couple de ralentissement à chaud), résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où chacune des ailettes serait décomposée en plusieurs tronçons décalés les uns par rapport aux autres et formant une pluralité de couronnes concentriques qui sont toutes composées par des nombres identiques de tronçons.

## Revendications

1. Rotor induit de ralentisseur électromagnétique, comprenant au moins un disque (2) prolongé axialement sur l'une de ses faces par une pluralité d'ailettes (9), chaque ailette étant délimitée par deux faces parallèles ou sensiblement telles inclinées en chacun de leurs points vers l'arrière sur les rayons correspondants d'angles supérieurs à 45 degrés et incurvées de façon à présenter leurs concavités vers l'arrière, les crêtes des ailettes étant raccordées entre elles par une joue annulaire (11) et l'ensemble du disque, des ailettes et de la joue étant constitué en un seul bloc moulé en acier, caractérisé en ce que les ailettes (9) sont au nombre de 64 au moins et sont particulièrement minces et rapprochées, l'épaisseur de chaque ailette étant inférieure à 5 mm et la largeur de l'intervalle compris entre deux ailettes consécutives, en sa zone la plus étroite, comptée perpendiculairement aux faces en regard des ailettes, étant inférieure à 10 mm.

2. Rotor selon la revendication 1, caractérisé en ce que l'épaisseur de chaque ailette (9) est de l'ordre de 3 à 4 mm.

3. Rotor selon l'une quelconque des revendications précédentes, caractérisé en ce que les ailettes (9) sont réunies entre elles à un niveau intermédiaire entre leur base et leur crète par un anneau mince (13) venu de moulage avec elles.

4. Rotor selon la revendication 3, caractérisé en ce que l'anneau (13) est plan.

5. Rotor selon l'une quelconque des revendications 3 et 4, caractérisé en ce que l'épaisseur de l'anneau (13) est de l'ordre de 3 mm.

6. Rotor selon l'une quelconque des précédentes revendications, comportant des bras de raccordement (10) à une bague de fixation (7), caractérisé en ce que chaque bras prolonge deux ailettes contiguës (9) qui se fondent en lui.

7. Rotor selon l'une quelconque des précédentes revendications, caractérisé en ce que chacune des ailettes (9) est décomposée en plusieurs tronçons décalés les uns par rapport aux autres et formant une pluralité de couronnes concentriques qui sont toutes composées par des nombres identiques de tronçons.

## Patentansprüche

1. Drehanker eines elektromagnetischen Verlangsamers, bestehend aus wenigstens einer Scheibe (2), die axial auf einer ihrer Oberflächen durch eine Anzahl von Flügeln (9) verlängert ist, wobei jeder Flügel durch zwei parallele oder annähernd parallele Flächen begrenzt wird, die an jedem ihrer Punkte nach hinten zu den entsprechenden Radien unter Winkeln geneigt verlaufen, die größer sind als 45° und so gebogen sind, daß ihre Konkavität nach hinten gerichtet ist, wobei die Kämme der Flügel untereinander über eine ringförmige Wange (11) verbunden sind und die Scheibe, die Flügel und die Wange aus einem einzigen Block aus Stahlguß bestehen, dadurch gekennzeichnet, daß die Anzahl der Flügel (9) wenigstens 64 beträgt, und die Flügel besonders dünn sind und nah beieinander liegen, wobei die Stärke der einzelnen Flügel unterhalb 5 mm liegt und die Breite des Zwischenraumes zwischen zwei aufeinanderfolgenden Flügeln in dem Bereich, in dem er am kleinsten ist, senkrecht zu den betreffenden Oberflächen der Flügel unterhalb 10 mm liegt.

2. Drehanker nach Anspruch 1, dadurch gekennzeichnet, daß die stärke der einzelnen Flügel (5) etwa 3 bis 4 mm beträgt.

3. Drehanker nach einem der vorhergehenden Ansprüche, dadurch gekennzeichnet, daß die Flügel (9) untereinander in einem mittleren Bereich zwischen ihrer Basis und ihrem Kamm durch einen dünnen Ring (13) miteinander verbunden sind, der gleichzeitig mit ihnen gegossen wird.

4. Drehanker nach Anspruch 3, dadurch gekennzeichnet, daß der Ring (13) flach ist.

5. Drehanker nach einem der vorhergehenden Ansprüche, dadurch gekennzeichnet, daß die stärke des Ringes (13) etwa 3 mm beträgt.

6. Drehanker nach einem der vorhergehenden Ansprüche, der Arme (10) zur Verbindung mit einem Befestigungsring (7) enthält, dadurch gekennzeichnet, daß jeder Arm aus zwei benachbarten, verlängerten Flügeln (9) besteht, die mit ihm vereinigt sind.

7. Drehanker nach einem der vorhergehenden Ansprüche, dadurch gekennzeichnet, daß die einzelnen Flügel (9) aus mehreren Teilstücken bestehen, die versetzt zueinander angeordnet sind und eine Anzahl von konzentrischen Kränzen bilden, die alle durch eine identische Anzahl von Teilstücken gebildet werden.

## Claims

1. Induced rotor for an electromagnetic retarder, comprising at least one disc (2) extended axially on one of its faces by a plurality of fins (9), each fin being defined by two parallel or substantially parallel faces slanted at each of their points rearwards with respect to the corresponding radii by angles greater than 45°and curved so that their concavities are turned rearwards, the tips of the fins being connected together by an annular flange (11) and the assembly formed by the disc, the fins and the flange being made as a single moulded block made of steel, characterized in that the number of fins (9) is at least equal to 64 and in that said fins are particularly thin and close together, the thickness of each fin being less than 5 mm and the width of the gap between two consecutive fins, in its narrowest zone, considered perpendicularly to the facing faces of the fins, being less than 10 mm.

2. Rotor according to claim 1, characterized in that the thickness of each fin (9) is about 3 to 4 mm.

3. Rotor according to any one of the preceding claims, characterized in that the fins (9) are joined together at an intermediate level between their base and their tip by a thin annulus (13) moulded integrally therewith.

4. Rotor according to claim 3, characterized in that the annulus (13) is flat.

5. Rotor according to any one of claims 3 and 4, characterized in that the thickness of the annulus (13) is about 3 mm.

6. Rotor according to any one of the preceding claims, comprising arms (10) for connection to a fixing ring (7), characterized in that each arm extends to contiguous fins (9) which merge therein.

7. Rotor according to any one of the preceding claims, characterized in that each of the fins (9) is split into several sections offset with respect to each other and forming a plurality of concentric rings which all comprise identical numbers of sections.
